# EUROPÄISCHE PATENTSCHRIFT

(11) **EP 3 356 751 B1**
(45) Veröffentlichungstag und Bekanntmachung des Hinweises auf die Patenterteilung: **12.06.2024**
(21) Anmeldenummer: 16775188.2
(22) Anmeldetag: 27.09.2016
(51) Int. Cl.: F25D 3/08, B65D 81/38, A01N 1/02, A61J 3/00

(54) **THERMOSCHUTZSPEICHERZELLE EINER KÜHLTRANSPORTBOX**
THERMO PROTECTION STORAGE CELL OF A COLD TRANSPORT BOX
CELLULE DE STOCKAGE A PROTECTION THERMIQUE D'UNE BOITE DE TRANSPORT REFRIGEREE

(30) Priorität: 28.09.2015 EP 15187043
(43) Veröffentlichungstag der Anmeldung: 08.08.2018
(73) Patentinhaber: Swissmedpack Technologien JP. Buettiker GmbH, 4054 Basel (CH)
(72) Erfinder: BÜTTIKER, Jean-Pierre, 4108 Witterswil (CH)
(74) Vertreter: Latscha Schöllhorn Partner AG
(86) Internationale Anmeldenummer: PCT/EP2016/072995
(87) Internationale Veröffentlichungsnummer: WO 2017/055280

(56) Entgegenhaltungen:
- EP-A1- 2 146 162
- WO-A1-2010/132726
- WO-A1-2013/002324
- JP-A- 2001 330 351
- KR-B1- 101 435 025
- US-A- 5 984 953
- US-A1- 2007 186 577
- US-A1- 2012 305 435

## Beschreibung

### Technisches Gebiet

Die Erfindung betrifft eine Transportbox gemäss dem Oberbegriff des unabhängigen Anspruchs 1 und Anwendungen einer solchen Transportbox.

### Stand der Technik

Für die Bewahrung von Gütern in einem für das jeweilige Gut bevorzugten beziehungsweise benötigten Temperaturbereich werden heutzutage verschiedene Einrichtungen eingesetzt. Unter anderem ist es bekannt, zum Transport von Gütern in einem bestimmten Temperaturbereich Kühlboxen beziehungsweise Kühltransportboxen einzusetzen. Beispielsweise ist es beim Transport von pharmazeutischen Arzneimitteln und insbesondere von biopharmazeutischen Arzneimitteln beziehungsweise Biopharmaka häufig äusserst wichtig, dass eine Wahrung eines bestimmten Temperaturbereichs während des ganzen Transports gewährleistet werden kann. Kann dieser Temperaturbereich während des Transports nicht gehalten werden, so dürfen die Arzneimittel üblicherweise nicht eingesetzt werden.

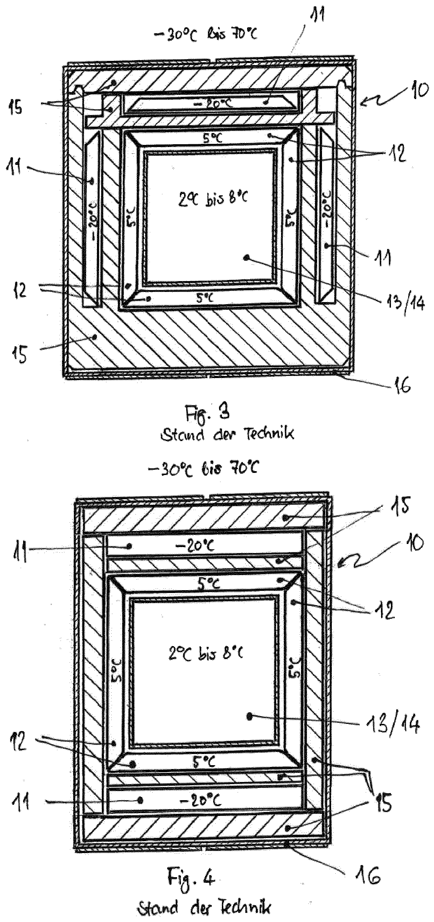

Beispiele von bekannten Kühltransportboxen (10) sind in Fig. 3, Fig. 4 und Fig. 5 gezeigt. Die Kühltransportboxen (10) sind jeweils im Wesentlichen ähnlich aufgebaut. Sie umfassen herkömmlicherweise jeweils einen Satz an Wärme- (11) und Kältespeicherzellen (12) als einfache Ausführungen von Thermoschutzspeicherzellen, welche ein in einem Innenraum (14) angeordnetes Gut (13), wie beispielsweise ein biopharmazeutisches oder klassisches Arzneimittel oder ein Lebensmittel, umhüllen. Der umhüllte Innenraum (14) soll die Haltbarkeitstemperatur des Guts von beispielsweise 2°C bis 8°C sicherstellen. Weitere Schichten der Kühltransportbox (10) sind eine ausserhalb der Kälte- und Wärmespeicherzellen (11, 12) angeordnete Isolation (15) und eine äussere Wellpappen-Box (16). Falls die eine Boxgesamtmasse 30 kg übersteigt, wird typischerweise eine Holzpalette zur Stabilisierung und Vereinfachung des Handlings verwendet.

Bei den bekannten Kälte- und Wärmespeicherzellen (11, 12) sind im Stand der Technik zwei Lösungsansätze bekannt, nämlich die in Fig. 3 und in Fig. 4 gezeigte Lösung der getrennten Wärme- und Kältespeicherzelle (12) sowie die in Fig. 5 gezeigte Lösung der Kombi-Wärme-Kälte-Zelle (11, 12).

Beim ersten Lösungsansatz wird die Wärmespeicherzelle entweder mit Paraffin oder mit Wasser befüllt, wobei die Zelle in einem Kühlraum bei 5°C vorkonditioniert wird. Die mit Wasser befüllte Kältespeicherzelle wird bei -20°C beziehungsweise -10°C in einem Tiefkühlraum vorkonditioniert, d.h. gefroren.

Beim zweiten Lösungsansatz wird die Kombi-Wärme-Kälte-Zelle mit Paraffin befüllt, wobei die Zelle in hochpräzisen Kühlräumen bei 3.5°C auf ±0.5°C genau vorkonditioniert werden muss.

Beim ersten Lösungsansatz haben die getrennten Wärme- und Kältezellen eine hohe Temperaturdifferenz, welche zu einer Kannibalisierung der Thermogesamtleistung führen kann. Bleibt beispielsweise eine Kühltransportbox des ersten Lösungsansatzes mit den -20°C Kältespeicherzellen an einer Flughafenabfertigung oder Zoll mehrere Tage in einem Kühlraum liegen, so gefriert das Arzneimittel und darf deshalb dem Patienten nicht mehr verabreicht werden.

Nachteilig wirkt sich beim zweiten Lösungsansatz mit der Kombi-Wärme-Kälte-Zelle die Aufteilung der thermischen Leistungen auf Kühlung und Heizung aus. Im Weiteren kann die Lösung durch die aufwendige präzise Vorkonditionierung sowie durch die Paraffinzusammensetzungsschwankung nachteilig sein.

Beide oben beschriebenen Lösungsansätze aus dem Stand der Technik besitzen typischerweise den ökologischen und ökonomischen Minuspunkt, dass die verschiedenen eingesetzten Kühltransportboxen sowie die Thermospeicherzellen nicht für eine Wiederverwendung gebaut sind, und somit oftmals nach einmaligem Gebrauch als Abfall entsorgt werden.

Der vorliegenden Erfindung liegt daher die Aufgabe zu Grunde, eine effiziente und sichere Aufbewahrung eines temperaturempfindlichen Guts in einem bestimmten Temperaturbereich insbesondere während dessen Transport auf eine einfache und sinnvolle Weise zu ermöglichen.

### Darstellung der Erfindung

Die Aufgabe wird erfindungsgemäss durch eine Transportbox gelöst, wie sie durch die Merkmale des unabhängigen Anspruchs 1 definiert ist. Vorteilhafte Ausführungsvarianten der Erfindung ergeben sich aus den abhängigen Ansprüchen.

Das Wesen der Erfindung besteht im Folgenden: Eine Transportbox für die Wahrung eines Temperaturbereichs von einer unteren Temperatur bis zu einer oberen Temperatur umfasst einen Zellenkörper und mindestens eine Füllkammer, die im Zellenkörper angeordnet ist. Die mindestens eine Füllkammer ist mit einem ersten Phasenwechselmaterial befüllt, welches bei etwa der unteren Temperatur seine Phase wechselt. Die mindestens eine Füllkammer ist weiter mit einem zweiten Phasenwechselmaterial befüllt, welches bei etwa der oberen Temperatur seine Phase wechselt.

Der Begriff "Phase" im Zusammenhang mit den Phasenwechselmaterialien kann für einen Aggregatzustand des zugehörigen Phasenwechselmaterials stehen. Insbesondere können die Begriffe "Phase" und "Aggregatzustand" in diesem Zusammenhang synonym verwendet werden.

Der Begriff "Wahrung" kann sich im Zusammenhang mit der Erfindung auf ein Halten unter bestimmten Bedingungen über einen bestimmten Zeitraum beziehen. Insbesondere umfassen diese Bedingungen die Temperatur, auf der ein temperaturempfindliches Gut gehalten werden soll. Beispielsweise kann sich das Wahren darauf beziehen, dass das Gut über einen Zeitraum, der zum Beispiel für einen Transport notwendig ist, im Temperaturbereich gehalten werden kann.

Unter dem Begriff "temperaturempfindliches Gut" kann ein Gegenstand beziehungsweise ein Produkt beziehungsweise ein Stoff verstanden werden, das in seiner Beschaffenheit oder Qualität beeinträchtigt wird, wenn es sich ausserhalb des Temperaturbereichs befindet. Insbesondere kann sich die Qualität des temperaturempfindlichen Guts verschlechtern, wenn es über einen bestimmten Zeitraum hinweg nicht im Temperaturbereich gehalten wird. Beispielsweise kann das temperaturempfindliche Gut ein pharmazeutischen Arzneimittel und insbesondere ein biopharmazeutisches Arzneimittel sein.

Eine Thermoschutzspeicherzelle kann beispielsweise aus einem festen Kunststoff wie einem Polyethylen oder einem ähnlichen hergestellt sein.

Die mindestens eine Füllkammer kann die Phasenwechselmaterialien sicher aufnehmen. Sie weist jedoch vorzugsweise einen Verschluss auf, welcher die Originalität der Phasenwechselmaterialien sicherstellen kann. Eine Manipulation der Phasenwechselmaterialien kann damit verhindert werden.

Mit der vorliegenden Erfindung wird eine kombinierte Wärme-Kälte-Thermoschutzspeicherzelle bereitgestellt, die in einer Transportbox angewendet wird Diese Transportbox ist mittels der erfindungsgemässen zwei Füllkammern mit einer gleichzeitigen Wärme- und Kälteschutzfunktion ausgestattet.

Die obere Temperatur ist typischerweise von der unteren Temperatur verschieden. Die obere Temperatur ist höher beziehungsweise grösser als die untere Temperatur. Dadurch kann der Umfang des Temperaturbereichs durch eine Subtraktion der unteren Temperatur von der oberen Temperatur ermittelt werden. Typische Phasenwechselmaterialien können wässerige Salzlösungen, Wasser, Salzhydrate und Paraffine, welche aus Alkanen zusammengesetzt sind, sein.

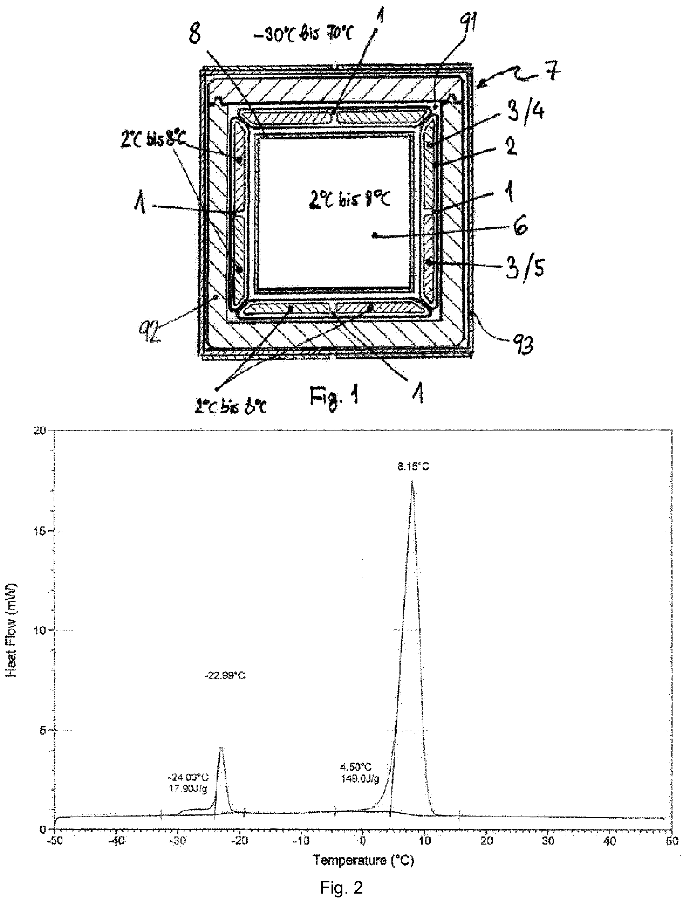

Die vorliegende Erfindung nutzt die verhältnismässig hohe latente Schmelzwärme, Lösungswärme oder Absorptionswärme unter Ausnützung der Enthalpie der Phasenwechselmaterialzustandsänderung zu Schutzzwecken des Gutes. Die Ausnutzung der Enthalpie mit dem Phasenübergang beispielsweise zwischen fest und flüssig, ist ein reversibler thermodynamischer Prozess, mit einer hohen Zyklenstabilität. Dabei kann die Enthalpie wie in Fig. 2 ersichtlich mittels Differentialkalorimetrie in J/g gemessen werden. Ist eine Lagerungstemperatur des Gutes auf einen bestimmten Temperaturbereich festgelegt, so hat die Bewahrung in der Thermoschutzspeicherzelle beziehungsweise ein Transport darin mit demselben Temperaturbereich zu erfolgen.

Damit ergeben sich die beiden Temperaturgrenzwerte beziehungsweise die obere Temperatur und die untere Temperatur des Temperaturbereiches. Insbesondere kann mit der Thermoschutzspeicherzelle gleichzeitig verhindert werden, dass der untere Temperaturbereich unterschritten und der obere Temperaturbereich überschritten wird. Eine aktive Kühlung beziehungsweise Erwärmung durch die Thermoschutzspeicherzelle findet dabei nicht statt.

Die erfindungsgemässe Transportbox besitzt also zwei unabhängige Schutzeinrichtungen, die eine zum Schutz der durch die untere Temperatur definierte Grenze beziehungsweise Temperaturuntergrenze und die andere zum Schutz der durch die obere Temperatur definierte Grenze beziehungsweise Temperaturobergrenze.

Zum Schutz der Temperaturuntergrenze von der Kälteseite wird bevorzugt möglichst grenznah eine adäquate Menge von erstem Phasenwechselmaterial zur Energieeinspeicherung zur Verfügung gestellt. Fliesst von aussen Kälte beziehungsweise eine Kälteenergie auf die Thermospeicherzelle, so führt die Kälteenergie bei latenter oder konstanter Energieeinlagerung zum Phasenwechsel des beispielsweise flüssigen Phasenwechselmaterials zu einem beispielsweise festen beziehungsweise kristallinen Phasen- beziehungsweise Aggregatszustand.

Zum Schutz der Temperaturobergrenze bei zuströmender Wärme wird bevorzugt möglichst grenznah eine adäquate Menge von zweitem Phasenwechselmaterial zur Energieeinspeicherung zur Verfügung gestellt. Fliesst Wärme beziehungsweise eine Wärmeenergie auf die Thermospeicherzelle, so führt die Wärmeenergie bei latenter oder konstanter Energieeinlagerung zum Phasenwechsel des beispielsweise festen beziehungsweise kristallinen Phasenwechselmaterials zu einem flüssigen Phasen- beziehungsweise Aggregatszustand.

Die vorliegende Erfindung hat gegenüber dem Stand der Technik unter anderem folgende Vorteile:

Der Temperaturbereich kann über die Auswahl geeigneter erster und zweiter Phasenwechselmaterialien effizient auf das Gut angepasst sein. Beispielsweise kann er einem Arzneimitteltemperaturschutzbereich entsprechen, wenn das Gut ein Arzneimittel ist.

Weiter können die beiden verschiedenen in der mindestens einen Thermospeicherzelle enthaltenen Phasenwechselmaterialien punktgenau und ohne Latentwärmespeicherverluste die beiden Temperaturgrenzwerte schützen.

Zudem kann die Thermospeicherzelle ein Mehrfaches an Schutzleistungsvermögen respektive Leistungs-/Gewichtsverhältnis besitzen, da die beiden Phasenwechselmaterialien ein verhältnismässig hohes Latentwärmespeichervermögen besitzen können, da keine Kannibalisierung der Thermogesamtleistung stattfindet und da ein Wärmeverlust an der Thermoschutzspeicherzelle verhindert werden kann.

Auch kann das verhältnismässig hohe Schutzleistungsvermögen der Thermoschutzspeicherzelle die Wandstärke einer zugehörigen Kühltransportbox beziehungsweise Transportbox reduzieren und damit zu einem im Vergleich zu herkömmlichen Transportboxen in der dritten Potenz erhöhtem Boxnutzvolumen führen.

Schliesslich kann eine Gefriergefahr minimiert beziehungsweise eliminiert werden, was beispielsweise wichtig sein kann, wenn die Thermoschutzspeicherzelle in einer Kühltransportbox zum Beispiel an einer Flughafenabfertigung oder am Zoll mehrere Tage in einem Kühlraum liegen bleibt, weil umgekehrt bei der unteren Temperatur und der oberen Temperatur die Thermoschutzspeicherzelle thermisch geladen oder reaktiviert werden kann.

Damit ermöglicht die erfindungsgemässe Transportbox auf einfache und sinnvolle Weise eine effiziente und sichere Wahrung des temperaturempfindlichen Guts im Temperaturbereich insbesondere während dessen Transport.

Vorzugsweise wechselt das erste Phasenwechselmaterial bei etwa der unteren Temperatur zwischen einer festen und einer flüssigen Phase. Analog dazu wechselt das zweite Phasenwechselmaterial bei etwa der oberen Temperatur vorzugsweise zwischen einer festen und einer flüssigen Phase. Solche Phasenwechselmaterialien ermöglichen eine effiziente und präzise Implementierung der Thermoschutzspeicherzelle.

Vorzugsweise betragen die untere Temperatur etwa 2°C und die obere Temperatur etwa 8°C. Eine so definierte Temperaturunter- und -obergrenze definiert einen Temperaturbereich, der in vielen Anwendungen gewünscht ist. Beispielsweise sind Arzneimittel und insbesondere biopharmazeutische Arzneimittel häufig in der Lagerung in diesem Temperaturbereich zu halten. Auch Lebensmittel und insbesondere Frischlebensmittel wie Milchprodukte, Fleisch oder Gemüse werden häufig bevorzugt in diesem Temperaturbereich gehalten.

Die mindestens eine Thermoschutzspeicherzelle umfasst jeweils einen Zellenkörper und zwei Füllkammern, wobei eine erste der mindestens zwei Füllkammern mit dem ersten Phasenwechselmaterial befüllt ist und eine zweite der mindestens zwei Füllkammern mit dem zweiten Phasenwechselmaterial. Mit einer solchen Thermoschutzspeicherzelle kann unter anderem erreicht werden, dass die Phasenwechselmaterialien unabhängig voneinander ausgewählt werden können. Insbesondere kann mit einer solchen Ausgestaltung verhindert werden, dass die Phasenwechselmaterialien gemischt werden müssen und eventuell miteinander interagieren. Entsprechend können die Phasenwechselmaterialien auf ihren Verwendungszweck hin optimiert ausgewählt werden, ohne dass berücksicht werden muss, ob sie einander beeinträchtigen.

Die Transportbox umfasst einen Innenraum zum Aufnehmen des temperaturempfindlichen Guts und eine Zellenwand, die den Innenraum umgibt. In der Zellenwand ist mindestens eine Thermoschutzspeicherzelle angeordnet, wie sie oben beschrieben ist.

Mit dem Begriff "Aufnehmen" kann ein Stellen, Setzen, Legen oder sonstiges Anordnen des Guts im Innenraum der Thermoschutzspeicherzelle gemeint sein. Dazu kann der Innenraum zugänglich machbar wie beispielsweise öffenbar sein. Das Gut kann dann in den geöffneten Innenraum gestellt, gesetzt oder gelegt werden und der Innenraum kann wieder geschlossen werden. Der Innenraum kann also vollständig schliessbar sein, sodass das Gut komplett von der Zellenwand umgeben ist.

Thermoschutzspeicherzellen der oben beschriebenen Art können in Transportboxen jeglicher Grösse, von kleinen Patiententransportboxen über Kuriertransportboxen und Palettentransportboxen bis zu Transportboxen in der Grösse von Flugzeugcontainern oder Schiffscontainern eingesetzt werden. Mit solchen Transportboxen können die oben im Zusammenhang mit der Thermoschutzspeicherzelle beschriebenen Effekte und Vorteile effizient implementiert werden. Insbesondere können mit solchen Transportboxen diese Effekte und Vorteile in dem häufigen Anwendungsfall des Transports von Gütern erzielt werden.

Die Thermoschutzspeicherzellen von erfindungsgemässen Transportboxen oder auch ganze Transportboxen können in mannigfaltiger Weise wiederverwertet werden. Beispielsweise können sie nach ihrer Verwendung zum Transport von Arzneimitteln als Kühlboxen beispielsweise für Lebensmittel verwendet werden. Dies kann aus ökologischen und ökonomischen Gründen häufig vorteilhaft und sinnvoll sein.

Die mindestens eine Thermoschutzspeicherzelle ist in der Transportbox von einer Isolation abgedeckt. Der Begriff "Abdecken" kann sich in diesem Zusammenhang darauf beziehen, dass die Thermoschutzspeicherzelle von aussen zumindest teilweise umgeben ist. Beispielsweise kann die mindestens eine Thermoschutzspeicherzelle so von der Isolation eingepackt sein.

Die Isolation kann ein lockeres Material sein, das beispielsweise anliegend an die Zellenwand aufgeschüttet ist. Oder die Isolation kann aus einem festen Material beispielsweise in Form von Platten oder dergleichen hergestellt sein.

Eine solche Isolation kann die Effizienz der Transportbox verbessern. Insbesondere kann das Übertragen von verhältnismässig schnellen Temperaturschwankungen ausserhalb der Transportbox auf die Thermoschutzspeicherzelle eingedämmt werden.

Vorzugsweise umfasst die Transportbox eine Schutzhülle, welche an einer Innenseite der Zellenwand, die an den Innenraum angrenzt, angeordnet ist. Eine solche Schutzhülle kann ein besonders effizientes, schonendes und geschütztes Aufnehmen des Guts im Temperaturbereich ermöglichen. Beispielsweise kann die Schutzhülle aus Wellpappe in Form einer inneren Box hergestellt sein.

Ein anderer weiterer Aspekt der Erfindung betrifft bevorzugte Verwendungen einer Transportbox der vorstehend beschriebenen Art.

Insbesondere kann die Transportbox erfindungsgemäss für den Transport eines pharmazeutischen Arzneimittels verwendet werden, wobei die untere Temperatur etwa 2°C und die obere Temperatur etwa 8°C

### Kurze Beschreibung der Zeichnungen

Weitere vorteilhafte Ausgestaltungen der Erfindung ergeben sich aus der nachfolgenden Beschreibung von Ausführungsbeispielen mit Hilfe der schematischen Zeichnung. Insbesondere wird im Folgenden die erfindungsgemässe Transportbox unter Bezugnahme auf die beigefügten Fig. 1 und Fig. 2 anhand von Ausführungsbeispielen detaillierter beschrieben. In den Fig. 3, Fig. 4 und Fig. 5 sind Ausführungsformen von Transportboxen aus dem Stand der Technik gezeigt, wie sie oben beschrieben sind. Es zeigen:
- Fig. 1: ein Ausführungsbeispiel einer erfindungsgemässen Transportbox mit einer Thermoschutzspeicherzelle;
- Fig. 2: eine grafische Darstellung des Verlaufs des Wärmeflusses eines Phasenwechselmaterials der Thermoschutzspeicherzelle von Fig. 1 über steigende Temperaturen gemessen mit Differentialkalorimetrie;
- Fig. 3: ein erstes Ausführungsbeispiel einer Transportbox aus dem Stand der Technik;
- Fig. 4: ein zweites Ausführungsbeispiel einer Transportbox aus dem Stand der Technik; und

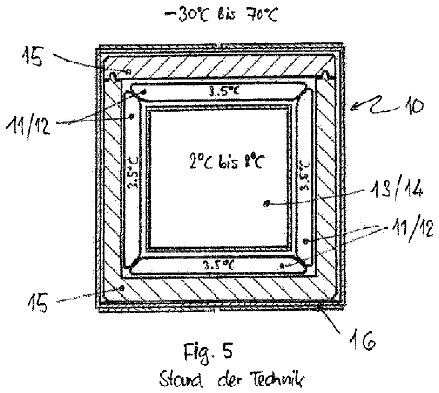

- Fig. 5: ein drittes Ausführungsbeispiel einer Transportbox aus dem Stand der Technik.

### Weq(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts" oder ähnliche werden zur Beschreibung der Anordnung bezeichneter Teile zueinander, der Bewegung bezeichneter Teile zueinander und der Richtungen hin zum oder weg vom geometrischen Mittelpunkt der Erfindung sowie benannter Teile derselben wie in den Fig. dargestellt verwendet. Diese räumlichen Relativangaben umfassen auch andere Positionen und Ausrichtungen als die in den Fig. dargestellten. Zum Beispiel wenn ein in den Fig. dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Fig. 1 zeigt eine Kühltransportbox 7 als Ausführungsbeispiel einer erfindungsgemässen Transportbox. Die Kühltransportbox 7 weist einen etwa acht Liter fassenden Innenraum 6 zum Aufnehmen eines temperaturempfindlichen Arzneimittels auf, der von einer Zellenwand 91 umgeben ist. Eine Innenseite der Zellenwand 91 ist mit einer Schutzschicht 8 ausgestattet, die den Innenraum 6 begrenzt. Der Innenraum 6 hat einen quasi quadratischen Querschnitt mit einer ebenen horizontalen Bodenwand, vertikalen Seitenwänden und einer horizontalen Deckenwand. Auf die Bodenwand des Innenraums 6 kann das Arzneimittel gestellt werden kann.

Die Zellenwand 91 ist mit mehreren Thermoschutzspeicherzellen 1 bestückt, die um den Innenraum 6 herum angeordnet sind. Insbesondere grenzt jeweils eine Thermoschutzspeicherzelle 1 an an eine der Boden-, Seiten- oder Deckenwände des Innenraums 6 an. Die Thermoschutzspeicherzellen 1 weisen jeweils einen Zellenkörper 2 auf, in dem zwei Füllkammern 3 angeordnet sind. Die Füllkammern 3 liegen flach nebeneinander, sodass beide an die entsprechende Wand des Innenraums 6 angrenzen. Die beiden Füllkammern 3 jeder Thermoschutzspeicherzelle 1 umfassen eine erste und eine zweite Füllkammer 3. Die erste Füllkammer 3 ist mit einem ersten Phasenwechselmaterial 4 befüllt, das bei etwa 2°C seine Phase wechselt. Die zweite Füllkammer 3 ist mit einem zweiten Phasenwechselmaterial 5 befüllt, das bei etwa 8°C seine Phase wechselt. Insbesondere wechseln das erste und zweite Phasenwechselmaterial 4, 5 ihre Phasen beziehungsweise Aggregatszustände bei 2°C beziehungsweise 8°C zwischen fest und flüssig.

Nach aussen hin ist die Zellenwand 91 von einer Isolation 92 umgeben. Dadurch sind die Thermoschutzspeicherzellen 1 von der Isolation 92 eingepackt und vor kurzfristigen Temperaturschwankungen und vor Einstrahlung geschützt. Die Isolation 92 weist einen unteren Gefässteil und einen Deckelteil auf. Der Deckelteil der Isolation 92 kann abgehoben und so das Innere der Isolation 92 zugänglich gemacht werden. Nach aussen ist die Transportbox 1 von einer Aussenwand 93 abgeschlossen. Die Aussenwand 93 fasst alle anderen Komponenten der Transportbox 1 in seinem Innern. Sie kann von oben her geöffnet werden. Die Aussenwand 93 kann aus Pappe beziehungsweise Wellpappe bestehen.

Über die jeweils ersten und zweiten Füllkammern 3 beziehungsweise die darin enthaltenen Phasenwechselmaterialien 4, 5 kann der Innenraum 6 in einem Temperaturbereich von 2° bis 8° gehalten werden. Die im Innenraum 6 angeordneten Arzneimittel können so während ihres Transports in diesem Temperaturbereich aufbewahrt werden.

Insbesondere kann in einem Fall, in dem Kälte unter 2°C die Isolation 92 durchdringt, das erste Phasenwechselmaterial 4 in den ersten Füllkammern 3 zunehmend von einer flüssigen in eine festen Phase wechseln. Dadurch kann eine verhältnismässig grosse Menge an Kälteenergie aufgenommen werden und der Innenraum 6 bleibt vor einer Kälteeinstrahlung geschützt. Das erste Phasenwechselmaterial 4 wirkt so als Kältesperre.

Analog dazu kann in einem Fall, in dem Wärme über 8°C die Isolation 92 durchdringt, das zweite Phasenwechselmaterial 5 in den zweiten Füllkammern 3 zunehmend von einer festen in eine flüssige Phase wechseln. Dadurch kann eine verhältnismässig grosse Menge an Wärmeenergie aufgenommen werden und der Innenraum 6 bleibt vor einer Wärmeeinstrahlung geschützt. Das zweite Phasenwechselmaterial 5 wirkt so als Wärmesperre.

In der Fig. 2 ist beispielhaft aufgezeigt, wie der Wärmefluss durch das zweite Phasenwechselmaterial 5 der Thermoschutzspeicherzelle 1 verläuft. Daraus ist ersichtlich, dass von -50°C bis +50°C ein über weite Strecken quasi konstanter Wärmefluss von etwas weniger als 1 mW vorhanden ist. Bei ungefähr -24°C erfolgt ein Ausschlag auf etwa 4 mW. Über die Fläche dieses Ausschlags lassen sich etwa 18 J pro Gramm zweites Phasenwechselmaterial 5 aufnehmen. Ein zweiter bedeutend grösserer Ausschlag ist bei etwa 8°C vorhanden, bei welcher Temperatur das zweite Phasenwechselmaterial 5 seine Phase zwischen flüssig und fest wechselt. Über die Fläche dieses zweiten Ausschlags lassen sich etwa 150 J pro Gramm zweites Phasenwechselmaterial 5 aufnehmen. Mit einer solchen Analyse beziehungsweise wie in Fig. 2 gezeigten Messung lassen sich Phasenwechselmaterialien identifizieren, die genau geforderte Bedingungen erfüllen. Insbesondere ist das in Fig. 2 gezeigte Material als Temperatursperre um die 8°C geeignet.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen.

## Patentansprüche

1. Transportbox (7) für den Transport eines temperaturempfindlichen Guts in einem Temperaturbereich von einer unteren Temperatur von etwa 2°C bis zu einer oberen Temperatur von etwa 8°C, umfassend:
einen Innenraum (6) zum Aufnehmen des temperaturempfindlichen Guts, und
eine Zellenwand (91), die den Innenraum (6) umgibt, wobei der Innenraum (6) Boden-, Seiten- und Deckenwände aufweist, wobei eine Innenseite der Zellenwand (91) mit einer Schutzschicht (8) ausgestattet ist, die den Innenraum (6) begrenzt und wobei der Innenraum (6) eine ebene horizontale Bodenwand, vertikale Seitenwände und eine horizontale Deckenwand hat, wobei
die Zellenwand (91) nach aussen hin von einer Isolation (92) umgeben ist, wobei die Isolation (92) einen unteren Gefässteil und einen Deckelteil aufweist, wobei der Deckelteil der Isolation (92) abgehoben werden kann, wobei
die Transportbox (7) nach aussen von einer Aussenwand (93) abgeschlossen ist und wobei die Aussenwand (93) alle anderen Komponenten der Transportbox (7) in ihrem Inneren fasst,
wobei
jeweils mindestens eine Thermoschutzspeicherzelle (1) für die Wahrung eines Temperaturbereichs von einer unteren Temperatur bis zu einer oberen Temperatur angrenzend an eine der Boden-, Seiten- oder Deckenwände des Innenraums (6) in der Zellenwand (91) angeordnet ist, wobei
die Thermoschutzspeicherzellen (1) jeweils einen Zellenkörper (2) und zwei Füllkammern (3), die im Zellenkörper (2) angeordnet sind,
**dadurch gekennzeichnet, dass**
die zwei Füllkammern (3) der Thermoschutzspeicherzellen (1) flach nebeneinander liegen, sodass die zwei Füllkammern (3) an die entsprechende eine der Boden-, Seiten- oder Deckenwände des Innenraums (6) angrenzen,
die erste Füllkammer (3) jeder Thermoschutzspeicherzelle (1) mit einem ersten Phasenwechselmaterial (4) befüllt ist, welches bei der unteren Temperatur von 2°C seine Phase wechselt, und
die zweite Füllkammer (3) jeder Thermoschutzspeicherzelle (1) mit einem zweiten Phasenwechselmaterial (5) befüllt ist, welches bei der oberen Temperatur von 8°C seine Phase wechselt.

2. Transportbox (7) nach Anspruch 1, wobei die Isolation (92) die Thermoschutzspeicherzellen (1) abdeckt.

3. Transportbox (7) nach Anspruch 1 oder 2, bei der das erste Phasenwechselmaterial (4) bei etwa der unteren Temperatur zwischen einer festen und einer flüssigen Phase wechselt.

4. Transportbox (7) nach einem der Ansprüche 1 bis 3, bei der das zweite Phasenwechselmaterial (5) bei etwa der oberen Temperatur zwischen einer festen und einer flüssigen Phase wechselt.

5. Transportbox (7) nach einem der vorangehenden Ansprüche, bei der die Füllkammern (3) jeweils mindestens einen Verschluss aufweisen.

6. Verwendung einer Transportbox (7) gemäss nach einem der vorangehenden Ansprüche für den Transport eines pharmazeutischen Arzneimittels.

## Claims

1. Transport box (7) for transporting a temperature-sensitive good in a temperature range from a lower temperature of approximately 2°C to an upper temperature of approximately 8°C, the transport box comprising:
an interior space (6) for accommodating the temperature-sensitive good, and
a cell wall (91) which surrounds the interior space (6), wherein the interior space (6) comprises bottom, side and top walls, wherein an inner side of the cell wall (91) is provided with a protective layer (8) which delimits the interior space (6), and wherein the interior space (6) has a flat horizontal bottom wall, vertical side walls and a horizontal top wall, wherein
the cell wall (91) is surrounded on the outside by insulation (92), wherein the insulation (92) has a lower vessel part and a top part, wherein the top part of the insulation (92) can be lifted off, wherein
the transport box (7) is closed off from the outside by an outer wall (93) and wherein the outer wall (93) encloses all other components of the transport box (7) in its interior,
wherein
at least one thermal protection storage cell (1) for maintaining a temperature range from a lower temperature to an upper temperature is arranged in the cell wall (91) adjacent to each one of the bottom, side or top walls of the interior space (6), wherein
the thermal protection storage cells (1) each have a cell body (2) and two filling chambers (3) which are arranged in the cell body (2),
**characterized in that**
the two filling chambers (3) of the thermal protection storage cells (1) lie flat next to one another so that the two filling chambers (3) are adjacent to the corresponding one of the bottom, side or top walls of the interior (6),
the first filling chamber (3) of each thermal protection storage cell (1) is filled with a first phase change material (4) which changes its phase at the lower temperature of 2°C, and
the second filling chamber (3) of each thermal protection storage cell (1) is filled with a second phase change material (5) which changes its phase at the upper temperature of 8°C.

2. Transport box (7) according to claim 1,
wherein the insulation (92) covers the thermal protection storage cells (1).

3. Transport box (7) according to claim 1 or 2, wherein the first phase change material (4) changes between a solid and a liquid phase at approximately the lower temperature.

4. Transport box (7) according to any of claims 1 to 3, wherein the second phase change material (5) changes between a solid and a liquid phase at approximately the upper temperature.

5. Transport box (7) according to any of the preceding claims, wherein the filling chambers (3) each have at least one closure.

6. Use of a transport box (7) according to any of the preceding claims for transporting a pharmaceutical drug.

## Revendications

1. Boîte de transport (7) destinée à transporter un produit sensible à la température dans une plage de température allant d'une température inférieure d'environ 2 °C à une température supérieure d'environ 8 °C, comprenant :
un espace intérieur (6) destiné à recevoir le produit sensible à la température, et
une paroi à cellules (91) entourant l'espace intérieur (6), l'espace intérieur (6) présentant des parois de fond, des parois latérales et des parois supérieures, un côté intérieur de la paroi à cellules (91) étant muni d'une couche protectrice (8) qui délimite l'espace intérieur (6) et l'espace intérieur (6) présentant une paroi de fond horizontale plane, des parois latérales verticales et une paroi supérieure horizontale,
la paroi à cellules (91) étant entourée vers l'extérieur par une isolation (92), l'isolation (92) présentant une partie formant récipient inférieure et une partie formant couvercle, la partie formant couvercle de l'isolation (92) pouvant être soulevée,
la boîte de transport (7) étant fermée vers l'extérieur par une paroi extérieure (93) et la paroi extérieure (93) renfermant tous les autres composants de la boîte de transport (7) en son sein,
respectivement au moins une cellule de stockage de protection thermique (1) pour le respect d'une plage de température allant d'une température inférieure à une température supérieure étant disposée de manière adjacente à l'une des parois de fond, latérales ou supérieure de l'espace intérieur (6) dans la paroi à cellules (91),
les cellules de stockage de protection thermique (1) comprenant respectivement un corps de cellule (2) et deux chambres de remplissage (3) qui sont disposées dans le corps de cellule (2),
**caractérisée en ce que**
les deux chambres de remplissage (3) des cellules de stockage de protection thermique (1) sont situées à plat l'une à côté de l'autre, de sorte que les deux chambres de remplissage (3) sont adjacentes à la paroi correspondante parmi les parois de fond, latérales ou supérieure de l'espace intérieur (6),
la première chambre de remplissage (3) de chaque cellule de stockage de protection thermique (1) est remplie d'un premier matériau à changement de phase (4) qui change de phase à la température inférieure de 2 °C, et
la seconde chambre de remplissage (3) de chaque cellule de stockage de protection thermique (1) est remplie d'un second matériau à changement de phase (5) qui change de phase à la température supérieure de 8 °C.

2. Boîte de transport (7) selon la revendication 1,
l'isolation (92) recouvrant les cellules de stockage de protection thermique (1).

3. Boîte de transport (7) selon la revendication 1 ou 2, dans laquelle le premier matériau à changement de phase (4) alterne entre une phase solide et une phase liquide à environ la température inférieure.

4. Boîte de transport (7) selon l'une des revendications 1 à 3, dans laquelle le second matériau à changement de phase (5) alterne entre une phase solide et une phase liquide à environ la température supérieure.

5. Boîte de transport (7) selon l'une des revendications précédentes, dans laquelle les chambres de remplissage (3) présentent respectivement au moins une fermeture.

6. Utilisation d'une boîte de transport (7) selon l'une des revendications précédentes pour le transport d'un médicament pharmaceutique.
